# EUROPEAN PATENT APPLICATION

(11) **EP 1 229 745 A2**
(43) Date of publication of application: **07.08.2002**
(21) Application number: 01850144.5
(22) Date of filing: 23.08.2001
(51) Int. Cl.: H04Q 1/14

(54) **Providing PSTN telephone service when the Digital Subscriber Line is interrupted due to power failure**

(30) Priority: 31.01.2001 US 772960
(71) Applicant: NHC Communications, Inc., Mount Royal, Quebec H4P 1A5 (CA)
(72) Inventor: Teixeira, Joe, Mount Royal, Quebec H4P 1A5 (CA)
(74) Representative: Wihlsson, Joakim Per Magnus

(57) **Abstract**

A system and method for providing analog telephone service, including E-911, service can be provided at a site that uses VolP over SDSL and has no POTS lines, in the event of a power outage at the site. The system comprises a remote cross connect switch connected to an integrated access device, to a digital access multiplexer connected to a digital telecommunications network, and to a voice service gateway, the remote cross connect switch operable to supply a first connection between the integrated access device and the digital access multiplexer, a second connection between the integrated access device and the voice service gateway, and to switch between the first and second connections; and a network management system connected to the digital telecommunications network and to the remote cross connect switch, the network management system operable to receive a message from the integrated access device indicating that power supplied to the integrated access device has failed and to, in response, transmit a command to the remote cross connect switch to switch from the first connection to the second connection thus providing analog voice service, and upon power being restored to the integrated access device, the integrated access device to notify the network management system, and in response to being notified, send a command to the remote cross connect switch which is operable to reestablish the original connection between the integrated access device and the digital access multiplexer, thus restoring VolP over SDSL.

## Description

### FIELD OF THE INVENTION

The present invention relates to a system and method for providing analog telephone service when voice over IP service is interrupted due to power failure.

### BACKGROUND OF THE INVENTION

Voice over Internet Protocol technologies (VolP) are making inroads against traditional Plain Old Telephone Service (POTS). Voice-over-IP takes continuous analog voice, digitizes it, packetizes it, formats it to Internet Protocol (IP) and transfers it across a LAN or WAN to a destination where it is ultimately reconstituted back into continuous analog voice. Businesses are attracted to VolP because it allows them to drastically reduce their long-distance phone charges. Digital Subscriber Line (DSL) is one of the signal protocols being used to carry VolP services. One version of DSL is Symmetrical DSL (SDSL), which is a capable of supporting voice and data over IP via a 2-wire line. SDSL is attractive because of its relatively low installation cost and its ability to handle multiple voice channels along with data over 2-wire lines. Furthermore, businesses that deploy VolP over SDSL can eliminate the need for additional Public Switched Telephone Network (PSTN) lines. However, a problem arises when Voice over SDSL is implemented in a site that does not have POTS. Since SDSL equipment is powered from the customer premises, VolP service over SDSL is interrupted if there is a power outage at the customer premises. The problem is particularly acute in the case of emergency 911 service (E-911), which likewise is interrupted in the event of a power outage at the customer premise (CP).

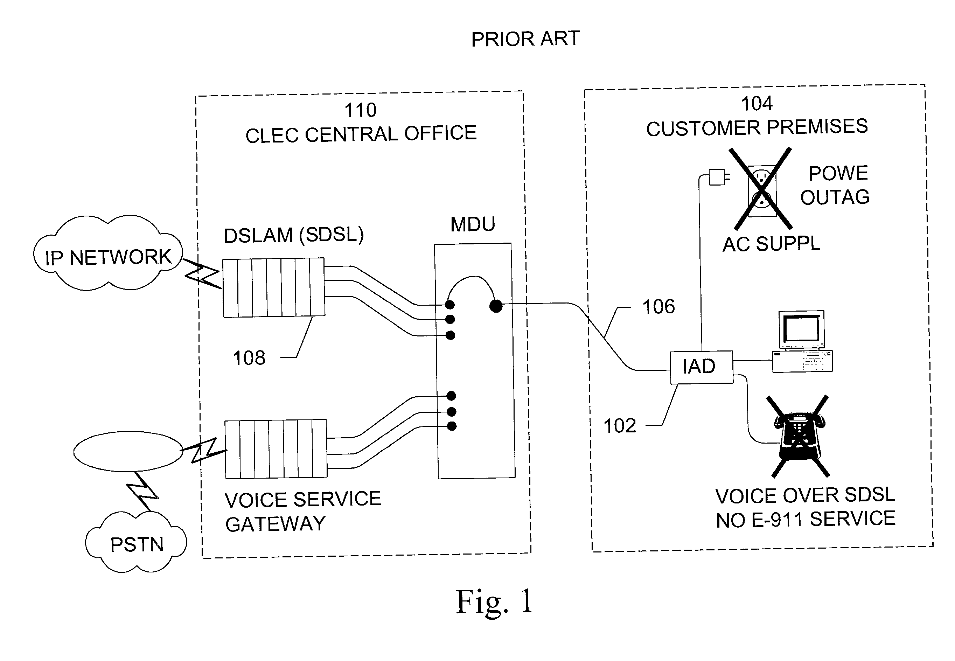

This problem with the prior art is illustrated in more detail in Fig. 1. In a synchronous high-speed data link, such as SDSL, communications is established by installing an Integrated Access Device (IAD) 102 at the customer premises 104 and connecting it via a dedicated 2-wire copper line 106 to an SDSL concentrator (DSLAM) 108. Typically, DSLAM 108 is located in the central office of the competitive local exchange carrier (CLEC) 110. Since DSLAM 108 is typically owned and operated by an entity other than the ILEC, this arrangement is termed co-location (COLLO). SDSL has enough bandwidth to support simultaneous voice and data traffic over IP without the need for additional POTS lines.

The problem lies in the inherent nature of Voice-over-SDSL, which relies on IAD 102, which draws power from customer premises 104. If there is a power failure at the customer's premises, then the client loses both voice and data communications. Although IAD 102 has some limited power back-up facility, once the batteries are depleted, the customer is left without power, even for emergency E-911 voice service.

By comparison, an analog POTS line receives its power from the central office so that in the event of a power outage at the customer premise 104, the analog handsets would still be available for E-911 service.

Presently, to avoid this problem, the customer would be forced to purchase an additional analog voice line, thereby undermining the whole reason for using voice over DSL in the first place. A need arises for a technique by which analog telephone service, including E-911, service can be provided at a site that uses VolP over SDSL and has no POTS lines, in the event of a power outage at the site.

### SUMMARY OF THE INVENTION

The present invention is a system and method for providing analog telephone service, including E-911, service can be provided at a site that uses VolP over SDSL and has no POTS lines, in the event of a power outage at the site.

The system comprises a remote cross connect switch connected to an integrated access device, to a digital access multiplexer connected to a digital telecommunications network, and to a voice service gateway, the remote cross connect switch operable to supply a first connection between the integrated access device and the digital access multiplexer, a second connection between the integrated access device and the voice service gateway, and to switch between the first and second connections; and a network management system connected to the digital telecommunications network and to the remote cross connect switch, the network management system operable to receive a message from the integrated access device indicating that power supplied to the integrated access device has failed and to, in response, transmit a command to the remote cross connect switch to switch from the first connection to the second connection.

The connection between the integrated access device and the remote cross connect switch is capable of carrying digital subscriber line signals and analog telephone signals. The digital access multiplexer is a Digital Subscriber Line Access Multiplexer (DSLAM).

When the integrated access device is connected to the digital access multiplexer, the connection between the integrated access device and the digital access multiplexer carries a digital subscriber line signal. The voice service gateway is connected to a public switched telephone network. When the integrated access device is connected to the voice service gateway, the connection between the integrated access device and the voice service gateway carries an analog telephone signal.

The network management system is further operable to receive a message from the integrated access device indicating that power supplied to the integrated access device has resumed and to, in response, transmit a command to the remote cross connect switch to switch from the second connection to the first connection. The connection between the integrated access device and the remote cross connect switch is capable of carrying digital subscriber line signals and analog telephone signals. The digital access multiplexer is a digital subscriber line access multiplexer. The integrated access device is connected to the digital access multiplexer, the connection between the integrated access device and the digital access multiplexer carries a digital subscriber line signal. The voice service gateway is connected to a public switched telephone network. The integrated access device is connected to the voice service gateway, the connection between the integrated access device and the voice service gateway carries an analog telephone signal.

### BRIEF DESCRIPTION OF THE DRAWINGS

The details of the present invention, both as to its structure and operation, can best be understood by referring to the accompanying drawings, in which like reference numbers and designations refer to like elements.
- Fig. 1: is a block diagram of a prior art telecommunications system implementing voice over SDSL service,
- Fig. 2: is an exemplary block diagram of telecommunications system, according to the present invention, implementing voice over SDSL service with emergency access to analog telephone service,
- Fig. 3: is an exemplary flow diagram of a process of operation of the present invention, implemented in the system shown in Fig. 2,
- Fig. 4: is an exemplary block diagram of telecommunications system, according to the present invention, implementing voice over SDSL service with emergency access to analog telephone service,
- Fig. 5: is an exemplary flow diagram of a process of operation of the present invention, implemented in the system shown in Fig. 4,
- Fig. 6: is an exemplary block diagram of a network management system shown in Figs. 2 and 4.
- Fig. 7: is an exemplary block diagram of a Remote Cross Connect Switch (Loop Management System - LMS) shown in Figs. 2 and 4,
- Fig. 8: shows an exemplary matrix board included in the Remote Cross Connect Switch shown in Fig. 7,
- Fig. 9: shows an example of cross point connection in the matrix board shown in Fig. 8,
- Fig. 10: shows an exemplary cross point connection pin used to establish a cross point connection in the matrix board shown in Fig. 8,
- Fig. 11: shows an exemplary robotic cross connector included in the Remote Cross Connect Switch shown in Fig. 7,
- Fig. 12: is an exemplary block diagram of an apparatus that verifies proper connection of a cross point connection pin shown in Fig. 10,
- Fig. 13: shows an example of matrix boards in relation to the robotic cross connector, and
- Figs. 14 - 19: illustrate some standard 3 dimensional connection paths, which are completed by the Remote Cross Connect Switch in response to commands.

### DETAILED DESCRIPTION OF THE INVENTION

Voice-over-IP takes continuous analog voice, digitizes it, packetizes it, formats it to Internet Protocol (IP) and transfers it across a LAN or WAN to a destination where it is ultimately reconstituted back into continuous analog voice. Digital Subscriber Line (DSL) is one of the signal protocols being used to carry VolP services. DSL provides the capability to transmit broadband data over existing two-wire telephone lines. There are several versions of DSL in common use. Asymmetric DSL (ADSL) provides greater bandwidth for downstream data than for upstream data. In addition, ADSL reserves a portion of the available channel bandwidth for support of traditional analog telephone service (Plain Old Telephone Service (POTS)). ADSL is aimed primarily at the residential market. Another version of DSL is Symmetric DSL (SDSL). SDSL provides equal bandwidth in both the upstream and downstream directions and does not provide support for POTS. SDSL is better suited to business applications, such as network server communications, etc. Voice may be supported by SDSL by use of Voice-over-IP (VolP) service over SDSL, known as Voice-over-SDSL (VoSDSL). Since SDSL equipment is powered from the customer premises, VolP service over SDSL is interrupted if there is a power outage at the customer premises. The problem is particularly acute in the case of emergency 911 service (E-911), which likewise is interrupted in the event of a power outage at the customer premise (CP).

The present invention overcomes the E-911 problem with VoSDSL by switching the connection of the Integrated Access Device (IAD), which is located at the customer premises, from a DSL connection to a standard POTS line, in the event of a power outage at the Customer Premises (CP). In order to accomplish this task, a Remote Copper Cross Connect Switch would automatically re-connecting an affected subscriber line to an analog voice line.

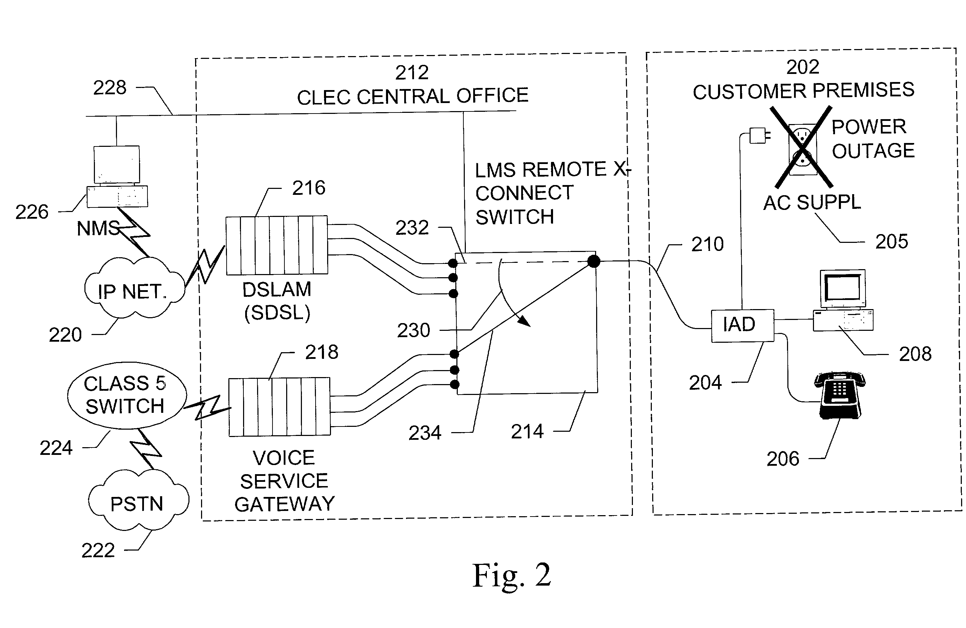

The arrangement by which the present invention switches the IAD to a standard POTS line is shown in Fig. 2. As shown in Fig. 2, equipment located at customer premises 202 includes IAD 204, with AC power supply 205, at least one telephone set 206 and at least one data processing system 208. Telephone set 206 is typically a standard analog telephone set and is connected by an analog line to IAD 204. IAD 204 digitizes the analog voice signal from telephone set 206, packetizes the digitized signal, formats the packets to Internet Protocol (IP) and transfers the packets via dedicated 2-wire copper line 210 to the CLEC central office 212 using SDSL. Data processing system 208 is connected to IAD 204 and transmits and receives digital data via IAD 204.

Equipment located at CLEC Central Office 212 includes Remote Cross-Connect Switch 214, Digital Subscriber Line Access Multiplexer (DSLAM) 216, and Voice Service Gateway (VSG) 218. DSLAM 216 is a system that links customer DSL connections to at least one high-speed Asynchronous Transfer Mode (ATM) line, which provides connection to IP network 220. Typically, IP network 220 is the Internet, but may be any public or private data transport network. VSG 218 links analog telephone lines to the Public Switched Telephone Network 222, typically via a telephone switch, such as a Class 5 Switch 224.

Network management system (NMS) 226 is connected to IP network 220 and also has a private connection 228 to Remote Cross-Connect Switch 214. Note that network 228 may also make use of network 222. NMS 226 can send and receive messages from any device communicatively connected to IP network 220, such as IAD 204. NMS 226 can control the configuration and operation of Remote Cross-Connect Switch 214 over connection 228. Likewise, NMS 226 can determine the status and configuration of Remote Cross-Connect Switch 214 over connection 228.

An example of a suitable cross-connect switch 214, is the CONTROLPOINT™ switch available from NHC. As used herein, the terms cross-connect and cross-connect switch are intended to mean any switch capable of reliably interconnecting telecommunications signals, including voice and data signals, from inputs to outputs under the influence of internal or external control signals. The terms are intended to encompass any such switch and control systems, including loop management systems. To illustrate the operation of an embodiment of a cross-connect switch 214 and the manner in which it is controlled, the CONTROLPOINT switch available from NHC is hereafter briefly described.

The CONTROLPOINT solution is NHC's integrated non-blocking copper cross-connect system that helps CLECs and ILECs qualify and provision DSL and other services remotely without the need to enter the CLEC's COLLO or ILEC's CO. The CONTROLPOINT solution works with third party equipment such as Harris, Hekimian and Tollgrade Remote Test Units, enabling the cross-connect to be used as a test access platform for rapid loop qualification. The CONTROLPOINT solution may be deployed for DSL test access for local loop qualification, provisioning, migration and fallback switching. The CONTROLPOINT solution is intended to work with every major DSLAM vendor.

The CONTROLPOINT cross-connect hardware has a matrix size and loopback capabilities that allow multiple services to be provisioned and migrated remotely on-the-fly and on-demand, thereby minimizing truck-rolls needed to qualify and provision high speed data services. The CONTROLPOINT solution allows the service provider to migrate users to higher speed data services quickly. The CLEC has the ability to use any available port on the DSLAM for fallback switching thus providing added value to both the CLEC and the subscriber.

The CONTROLPOINT solution is managed via two-key elements: CONTROLPOINT CMS 226 and CONTROLPOINT CMS Remote (Controller) (not shown). CONTROLPOINT CMS 226 is the control and management software for NHC's CONTROLPOINT Solution. Element 226 is later referred to generically as network management system (NMS) and may also be referred to as a terminal. CONTROLPOINT CMS 226 communicate with NHC's CONTROLPOINT Copper Cross-Connect 214 via the CONTROLPOINT CMS Remote Controller to allow voice and high-speed data service providers to take full control of their copper cross-connect infrastructure.

CONTROLPOINT CMS controls and tracks the physical connections within the CONTROLPOINT matrix, along with vital subscriber and equipment information. CONTROLPOINT CMS features an intuitive Graphical User Interface (GUI) for greater ease of use. Port connections involve a simple drag & drop operation. CONTROLPOINT CMS's integrated database tracks CONTROLPOINT subscriber/service connections and organizes the network into multi-level geographical views by country, city and site location. CONTROLPOINT CMS Remote is the SNMP control interface for NHC's CONTROLPOINT copper cross-connect switch, which allow the CONTROLPOINT cross-connect 214 to be managed via NHC's CONTROLPOINT Control and Management Software (CMS) or managed via third party Network Management System (NMS). The CONTROLPOINT CMS Remote is connected to an Ethernet LAN and is accessible via standard SNMP commands. The CONTROLPOINT CMS Remote connects to CONTROLPOINT cross-connect via serial link. The device receives standard SNMP commands from the NMS or CONTROLPOINT CMS and communicates them to the CONTROLPOINT cross-connect. Support for API (application interfaces) within the CONTROLPOINT CMS Remote and CONTROLPOINT CMS allows for customization to support NHC's proposed line-sharing solution.

While the CONTROLPOINT switching system may be used to implement the cross-connect switch, it will be understood that any remotely controllable cross-connect switching system may be implemented according to embodiments of the present invention. The cross-connect switch 214 and its controllers are hereafter referred to generically. Also, the terms cross-connect switch and cross-connect are used interchangeably.

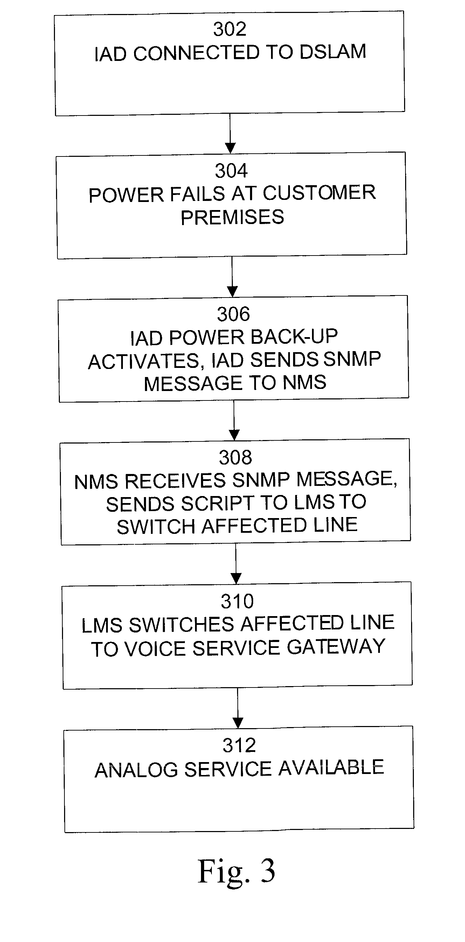

A process of operation of the present invention, implemented in the system shown in Fig. 2, in which the power to the customer premises fails, is shown in Fig. 3. It is best viewed in conjunction with Fig. 2. The process begins with step 302, in which, in the normal situation, IAD 204 is connected by the Remote Cross-Connect Switch 214 to DSLAM 216. This arrangement provides SDSL connection of data processing system 208 and VoSDSL connection of telephone set 206 to IP network 220. In step 304, electrical power provided at customer premises 202 by AC supply 205 fails. In step 306, the power system of IAD 204 detects the power failure of step 304 and begins to supply back-up power to IAD 204. The power system also notifies IAD 204 of the power failure. The power system of IAD 204 typically includes a battery back-up supply that can supply power for several hours.

In response to the notification from the power system, IAD 204 sends a message to NMS 226 over the SDSL connection typically using the Simple Network Management Protocol (SNMP). SNMP is a set of protocols for managing complex networks that includes messages for indicating the status and proper function of devices. The message sent by IAD 204 to NMS 226 identifies IAD 204 and indicates that the power to IAD 204 has failed. In step 308, NMS 226 receives the SNMP message indicating that the power to IAD 204 has failed. In response, NMS 226 generates and sends a command script to the Remote Cross-Connect Switch 214 to switch 230 the affected line, line 210, from connection 232 with DSLAM 216 to connection 234 with VSG 218. In step 310, Remote Cross-Connect Switch 214 receives the command script from NMS 226 and switches 230 line 210 from connection 232 with DSLAM 216 to connection 234 with VSG 218. In step 312, analog service via line 210, connection 234, and VSG 218 is available for use.

Although not shown in Fig. 3, IAD 204 also enters a failure mode, in which telephone set 206 is directly connected to line 210. The failure mode of IAD 204 is maintained without power, thus the connection survives the expiration of the back-up power supply of IAD 204.

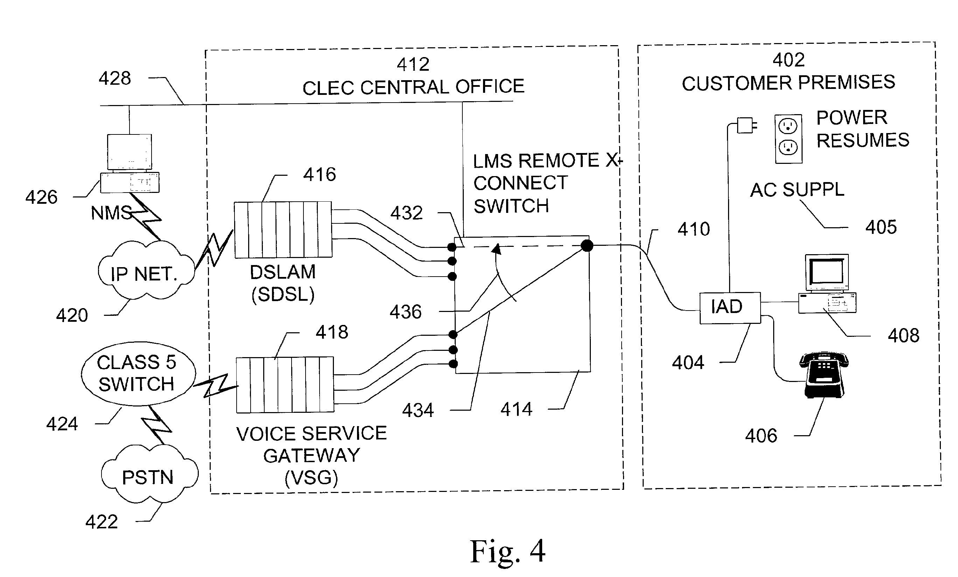

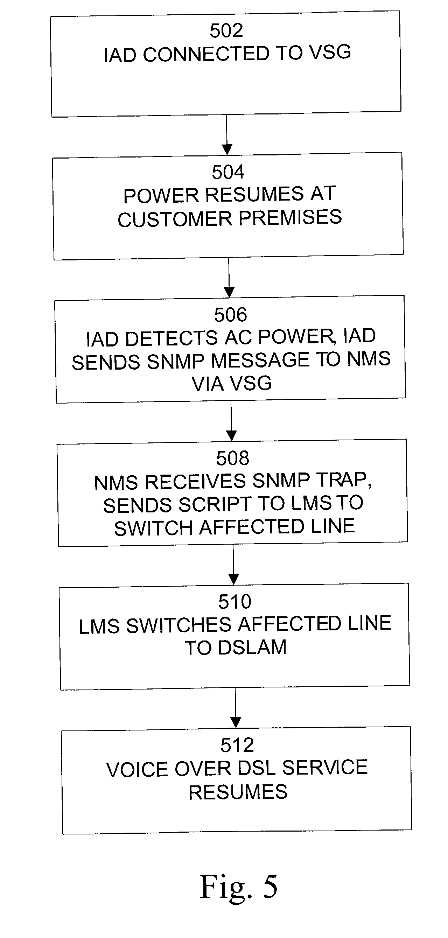

A process of operation of the present invention, implemented in the system shown in Fig. 4, in which the power to the customer premises resumes, is shown in Fig. 5. It is best viewed in conjunction with Fig. 4. The process begins with step 502, in which, in the power failure situation shown in Fig. 2, IAD 404 is connected by Remote Cross-Connect Switch 414 to VSG 418. This arrangement provides analog connection of telephone set 406 to VSG 418. In step 504, electrical power provided at customer premises 402 by AC supply 405 resumes. In step 506, the power system of IAD 404 detects the power resumption of step 504 and begins to supply power to IAD 404. The power system also notifies IAD 404 of the power resumption. In response to this notification, IAD 404 sends an SNMP message to NMS 426 identifying IAD 404 indicating that the power to IAD 404 has resumed. This may be accomplished via Voice service Gateway 418 which may also have access to network 420 and thus network 428. In step 508, NMS 426 receives the SNMP message indicating that the power to IAD 404 has resumed. In response, NMS 426 generates and sends a command script to Remote Cross-Connect Switch 414 to switch 436 the affected line, line 410, from connection 434 with VSG 418 to connection 432 with DSLAM 416. In step 510,

Remote Cross-Connect Switch 414 receives the command script from NMS 426 and switches 436 the affected line, line 410 from connection 434 with VSG 418 to connection 432 with DSLAM 416. In step 512, SDSL connection of data processing system 408 and VoSDSL connection of telephone set 406 to IP network 420 is available for use.

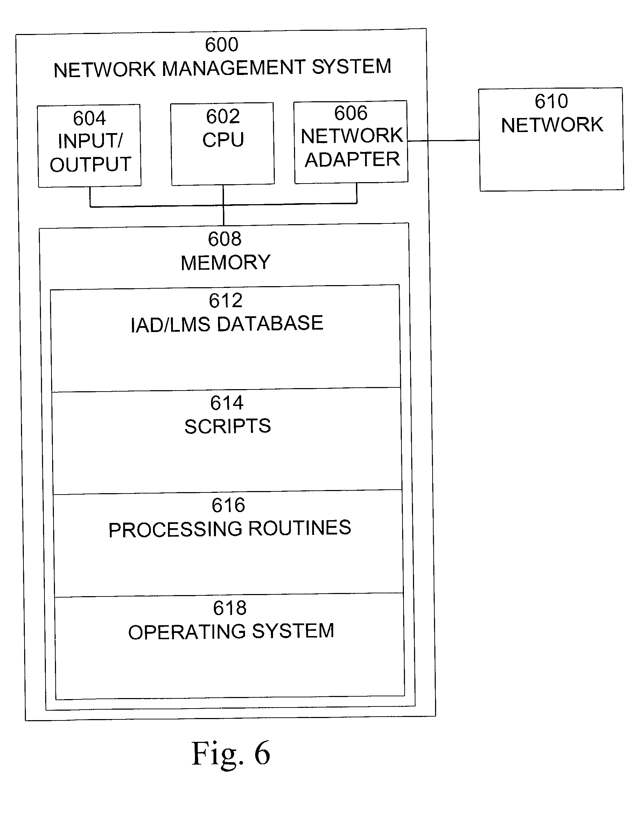

An exemplary block diagram of a network management system 600, according to the present invention, is shown in Fig. 6. Network management system 600 is typically a programmed general-purpose computer system, such as a personal computer, workstation, server system, and minicomputer or mainframe computer.

Network management system 600 includes processor (CPU) 602, input/output circuitry 604, network adapter 606, and memory 608. CPU 602 executes program instructions in order to carry out the functions of the present invention. Typically, CPU 602 is a microprocessor, such as an INTEL PENTIUM® processor, but may also be a minicomputer or mainframe computer processor. Input/output circuitry 604 provides the capability to input data to, or output data from, computer system 600.

For example, input/output circuitry may include input devices, such as keyboards, mice, touchpads, trackballs, scanners, etc., output devices, such as video adapters, monitors, printers, etc., and input/output devices, such as, modems, etc. Network adapter 606 interfaces network management system 600 with network 610. Network 610 may be any standard local area network (LAN) or wide area network (WAN), such as Ethernet, Token Ring, the Internet, or a private or proprietary LAN/WAN, but typically, IP network 220 is the Internet. Note that this network may also be represented by serial dial-up.

Memory 608 stores program instructions that are executed by, and data that are used and processed by, CPU 602 to perform the functions of the present invention.

Memory 608 may include electronic memory devices, such as random-access memory (RAM), read-only memory (ROM), programmable read-only memory (PROM), electrically erasable programmable read-only memory (EEPROM), flash memory, etc., and electromechanical memory, such as magnetic disk drives, tape drives, optical disk drives, etc., which may use an integrated drive electronics (IDE) interface, or a variation or enhancement thereof, such as enhanced IDE (EIDE) or ultra direct memory access (UDMA), or a small computer system interface (SCSI) based interface, or a variation or enhancement thereof, such as fast-SCSI, wide-SCSI, fast and wide-SCSI, etc, or a fiber channel-arbitrated loop (FC-AL) interface.

Memory 608 includes a plurality of blocks of data, such as IAD/Loop Management System (LMS) database 612 and scripts block 614, and a plurality of blocks of program instructions, such as processing routines 616 and operating system 618. IAD/LMS database 612 stores information relating to lADs and the LMS or Remote Cross-Connect Switches that are managed- and controlled by NMS 600. Scripts block 614 includes scripts that are transmitted by NMS 600 to Remote Cross-Connect Switches to control the connection of circuits. Processing routines 616 are software routines that implement the processing performed by the present invention, such as receiving SNMP messages, accessing IAD/LMS database 612, transmitting scripts from script block 614, etc. Operating system 618 provides overall system functionality.

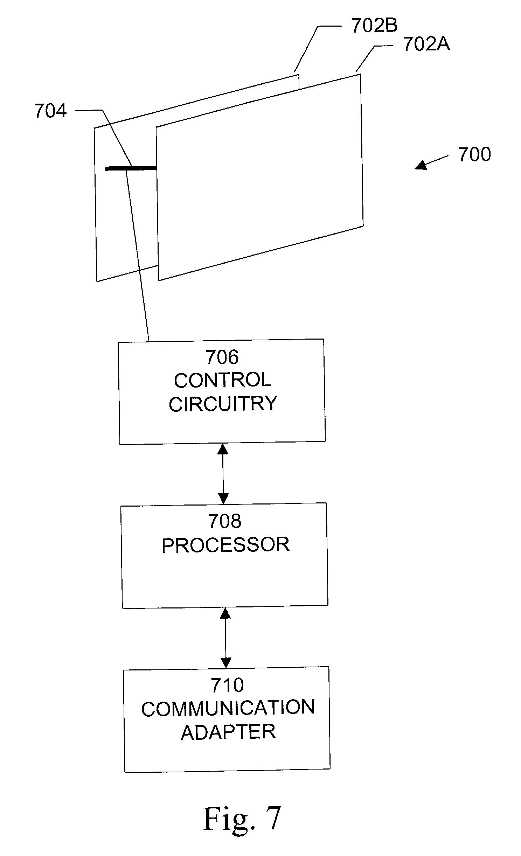

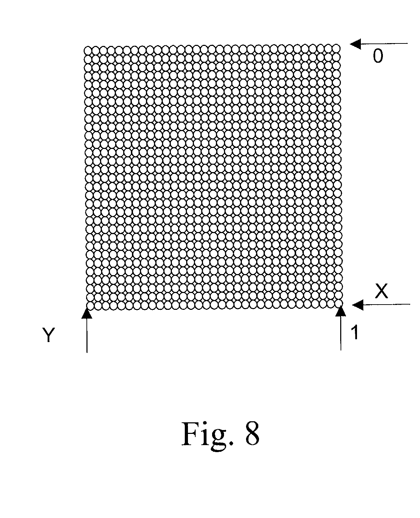

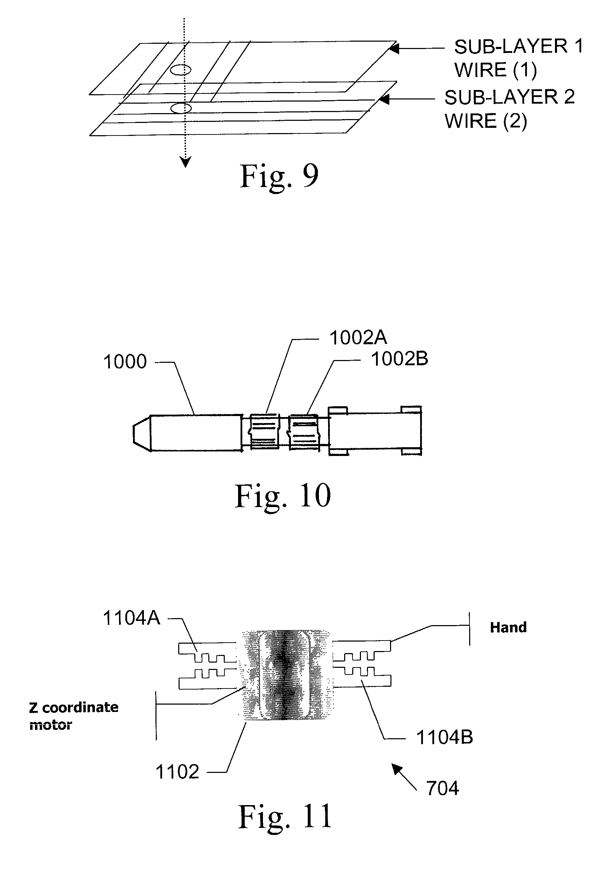

An exemplary block diagram of a Remote Cross-Connect Switch 700 is shown in Fig. 7. Switch 700 includes matrix boards 702A and 702B, robotic cross-connector 704, control circuitry 706, processor 708 and communication adapter 710. Matrix boards 702A and 702B, an example of which is shown in more detail in Fig. 8, are multi-layer matrices of circuits having holes at the intersections of circuits on different layer. The holes, known as cross points, allow the connection of pairs of circuits on different layers by the use of conductive pins. To make a cross connections, a pin is inserted into one of holes in a matrix board, as shown in Fig. 9.

Each pin, such as pin 1000, shown in Fig. 10, has two metal contacts 1002A and 1002B on the shaft, which create the connection between the circuits on different layers of the matrix board.

Robotic cross connector 704, an example of which is shown in Fig. 11, provides the capability to move a pin to an appropriate cross point and to insert the pin to form a connection at the cross point or remove the pin to break a cross connection. The mechanism of robotic cross connector 704 is capable of movement in three dimensions, using a separate motor for movement in each dimension. For example, Z-coordinate motor 1102, shown in Fig. 11, provides movement of the mechanism along the Z-axis..

A pin is carried, inserted and removed by a robotic "hand", such as hand 1104A or 1104B, which is part of robotic cross connector 704.

Control circuitry 706 generates the signals necessary to control operation of robotic cross-connector 704, in response to commands from processor 708. Processor 708 generates the commands that are output to control circuitry 706 in response to commands received from the network management system via communication adapter 710.

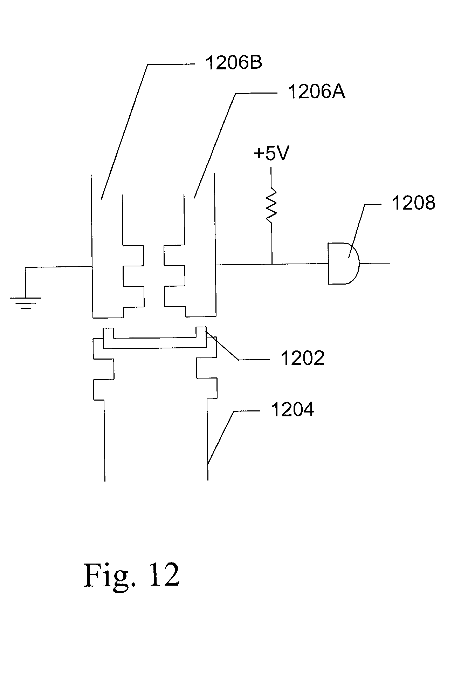

Once the pin has been inserted into the cross-point, robotic cross connector 704 then verifies that the connection has been successfully made, as shown in Fig. 12. In addition to the metal contacts on the shaft of each pin that form the connections, there is also a metal strip 1202 attached to each pin, such as pin 1204. The robot verifies the connection by sending a small current from one hand 1206A to the other hand 1206B. The metallic parts of the robot hand are electrically insulated. Hand 1206B is connected to the ground and hand 1206A is connected to current detector 1208. When the hands touches the metallic strip on the head of connect pin 1204, current flows through the pin and the output of detector 1208 will change states if the insertion is good. If the insertion is not good then the output of detector 1208 will not change.

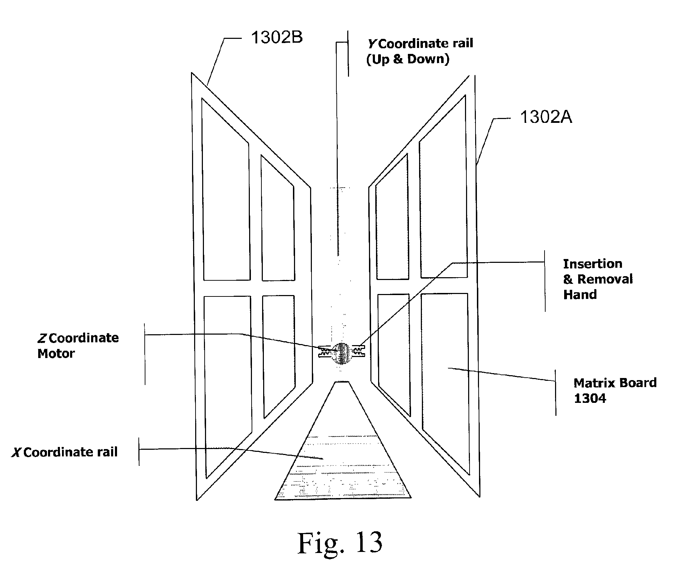

An example of matrix boards in relation to the robotic cross-connector is shown in Fig. 13. As shown, typically two mother boards 1302A and 130213, upon which matrix boards 1304 are mounted, one robotic cross-connector 1102, and the additional circuitry are grouped to form a cross connect system.

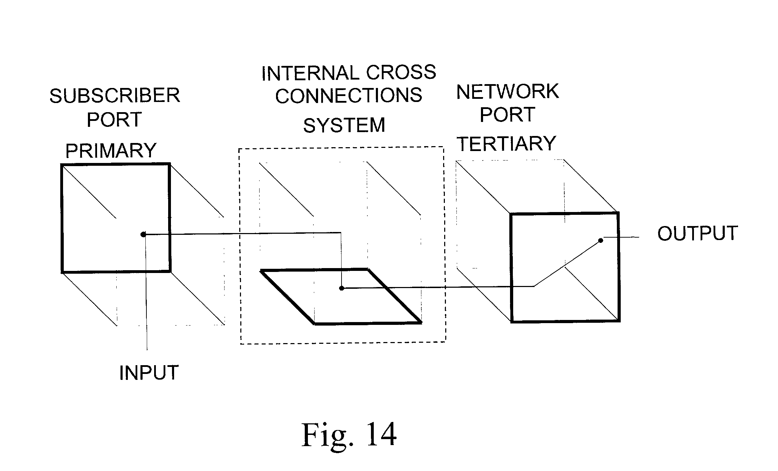

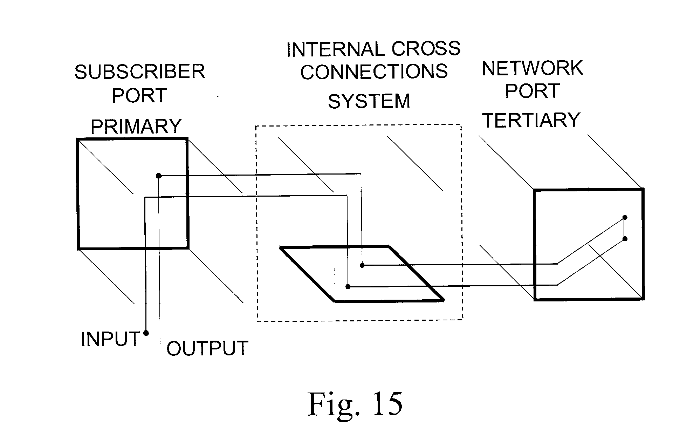

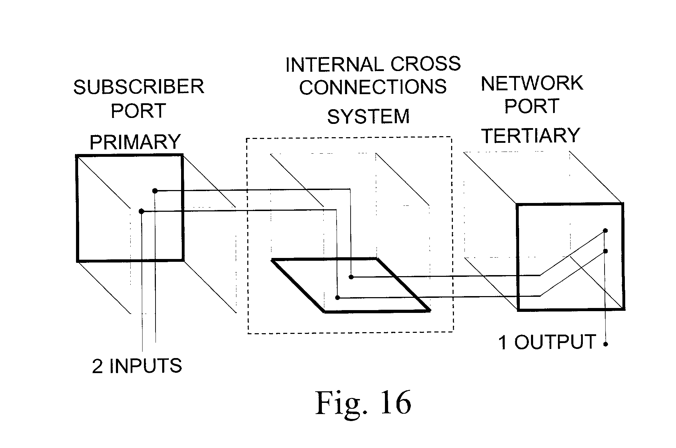

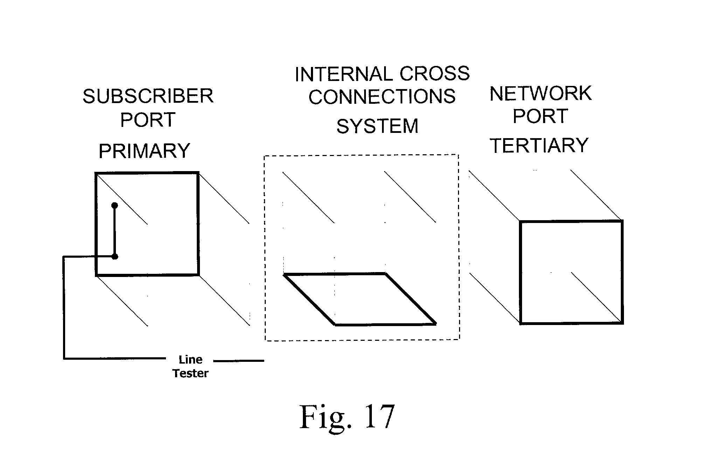

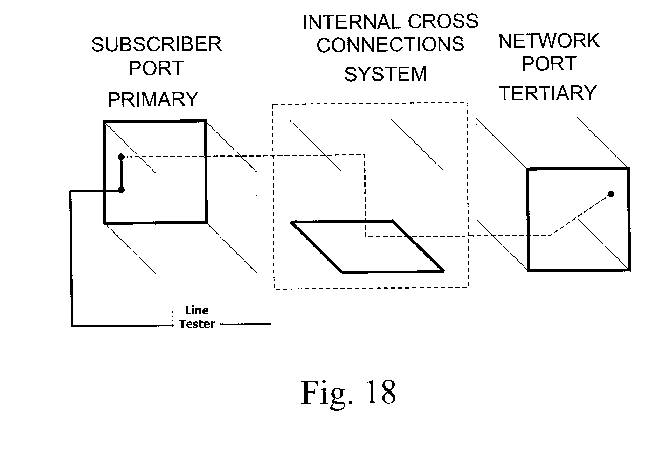

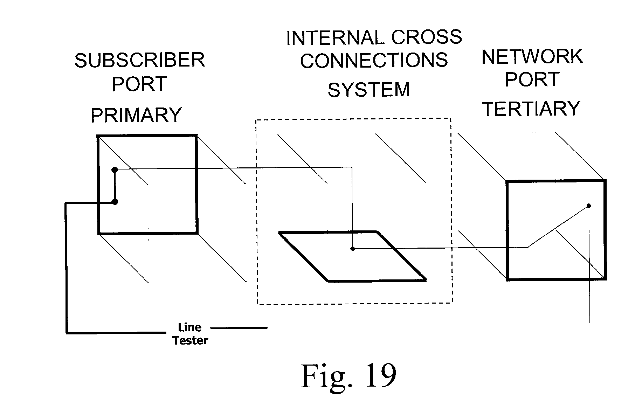

Figs. 14 - 19 illustrate some standard 3 dimensional connection paths, which are completed by the Remote Cross-Connect Switch in response to commands.

Although specific embodiments of the present invention have been described, it will be understood by those of skill in the art that there are other embodiments that are equivalent to the described embodiments. Accordingly, it is to be understood that the invention is not to be limited by the specific illustrated embodiments, but only by the scope of the appended claims.

## Claims

1. A method of providing telephone service in the event of a power failure comprising the steps of
providing digital telephone service via an integrated access device connected to a remote cross connect switch connected to a digital access multiplexer connected to a digital telecommunications network, the remote cross connect switch supplying the connection between the integrated access device and the digital access multiplexer;
detecting a failure of power supplied to the integrated access device;
transmitting a message from the integrated access device to a network management system connected to the remote cross connect switch indicating that power supplied to the integrated access device has failed; and in response to receiving the message at the network management system,
transmitting a command to the remote cross connect switch to switch the connection of the integrated access device to the digital access multiplexer to a connection of the integrated access device to a voice service gateway.

2. The method of claim 1, wherein the connection between the integrated access device and the remote cross connect switch is capable of carrying digital subscriber line signals and analog telephone signals.

3. The method of claim 2, wherein the digital access multiplexer is a digital subscriber line access multiplexer.

4. The method of claim 3, wherein, when the integrated access device is connected to the digital access multiplexer, the connection between the integrated access device and the digital access multiplexer carries a digital subscriber line signal.

5. The method of claim 4, wherein the voice service gateway is connected to a public switched telephone network.

6. The method of claim 5, wherein, when the integrated access device is connected to the voice service gateway, the connection between the integrated access device and the voice service gateway carries an analog telephone signal.

7. The method of claim 1, further comprising the steps of
detecting a resumption of power supplied to the integrated access device;
transmitting a message from the integrated access device to a network management system connected to the remote cross connect switch indicating that power supplied to the integrated access device has resumed; and in response to receiving the message at the network management system,
transmitting a command to the remote cross connect switch to switch the connection of the integrated access device to the voice service gateway to a connection of the integrated access device to the digital access multiplexer.

8. The method of claim 7, wherein the connection between the integrated access device and the remote cross connect switch is capable of carrying digital subscriber line signals and analog telephone signals.

9. The method of claim 8, wherein the digital access multiplexer is a digital subscriber line access multiplexer.

10. The method of claim 9, wherein, when the integrated access device is connected to the digital access multiplexer, the connection between the integrated access device and the digital access multiplexer carries a digital subscriber line signal.

11. The method of claim 10, wherein the voice service gateway is connected to a public switched telephone network.

12. The method of claim 11, wherein, when the integrated access device is connected to the voice service gateway, the connection between the integrated access device and the voice service gateway carries an analog telephone signal.

13. A method of resuming digital telephone service upon resumption of power after a power failure, the method comprising the steps of
providing analog telephone service via an integrated access device connected to a remote cross connect switch connected to a voice service gateway connected to a public switched telephone network, the remote cross connect switch supplying the connection between the integrated access device and the voice service gateway;
detecting a resumption of power supplied to the integrated access device;
transmitting a message from the integrated access device to a network management system connected to the remote cross connect switch indicating that power supplied to the integrated access device has resumed; and in response to receiving the message at the network management system,
transmitting a command to the remote cross connect switch to switch the connection of the integrated access device to the voice service gateway to a connection of the integrated access device to the digital access multiplexer.

14. The method of claim 13, wherein the connection between the integrated access device and the remote cross connect switch is capable of carrying digital subscriber line signals and analog telephone signals.

15. The method of claim 14, wherein the digital access multiplexer is a digital subscriber line access multiplexer.

16. The method of claim 14, wherein the digital access multiplexer is connected to a digital telecommunications network.

17. The method of claim 16, wherein, when the integrated access device is connected to the digital access multiplexer, the connection between the integrated access device and the digital access multiplexer carries a digital subscriber line signal.

18. The method of claim 17, wherein, when the integrated access device is connected to the voice service gateway, the connection between the integrated access device and the voice service gateway carries an analog telephone signal.

19. A system for providing telephone service in the event of a power failure comprising:
means for providing digital telephone service via an integrated access device connected to a remote cross connect switch connected to a digital access multiplexer connected to a digital telecommunications network, the remote cross connect switch supplying the connection between the integrated access device and the digital access multiplexer;
means for detecting a failure of power supplied to the integrated access device;
means for transmitting a message from the integrated access device to a network management system connected to the remote cross connect switch indicating that power supplied to the integrated access device has failed; and
means for, in response to receiving the message at the network management system, transmitting a command to the remote cross connect switch to switch the connection of the integrated access device to the digital access multiplexer to a connection of the integrated access device to a voice service gateway.

20. The system of claim 19, wherein the connection between the integrated access device and the remote cross connect switch is capable of carrying digital subscriber line signals and analog telephone signals.

21. The system of claim 20, wherein the digital access multiplexer is a digital subscriber line access multiplexer.

22. The system of claim 21, wherein, when the integrated access device is connected to the digital access multiplexer, the connection between the integrated access device and the digital access multiplexer carries a digital subscriber line signal.

23. The system of claim 22, wherein the voice service gateway is connected to a public switched telephone network.

24. The system of claim 23, wherein, when the integrated access device is connected to the voice service gateway, the connection between the integrated access device and the voice service gateway carries an analog telephone signal.

25. The system of claim 19, further comprising:
means for detecting a resumption of power supplied to the integrated access device;
means for transmitting a message from the integrated access device to a network management system connected to the remote cross connect switch indicating that power supplied to the integrated access device has resumed; and
means for, in response to receiving the message at the network management system, transmitting a command to the remote cross connect switch to switch the connection of the integrated access device to the voice service gateway to a connection of the integrated access device to the digital access multiplexer.

26. The system of claim 25, wherein the connection between the integrated access device and the remote cross connect switch is capable of carrying digital subscriber line signals and analog telephone signals.

27. The system of claim 26, wherein the digital access multiplexer is a digital subscriber line access multiplexer.

28. The system of claim 27, wherein, when the integrated access device is connected to the digital access multiplexer, the connection between the integrated access device and the digital access multiplexer carries a digital subscriber line signal.

29. The system of claim 28, wherein the voice service gateway is connected to a public switched telephone network.

30. The system of claim 29, wherein, when the integrated access device is connected to the voice service gateway, the connection between the integrated access device and the voice service gateway carries an analog telephone signal.

31. A system for resuming digital telephone service upon resumption of power after a power failure, the system comprising:
means for providing analog telephone service via an integrated access device connected to a remote cross connect switch connected to a voice service gateway connected to a public switched telephone network, the remote cross connect switch supplying the connection between the integrated access device and the voice service gateway;
means for detecting a resumption of power supplied to the integrated access device;
means for transmitting a message from the integrated access device to a network management system connected to the remote cross connect switch indicating that power supplied to the integrated access device has resumed; and
means for, in response to receiving the message at the network management system, transmitting a command to the remote cross connect switch to switch the connection of the integrated access device to the voice service gateway to a connection of the integrated access device to the digital access multiplexer.

32. The system of claim 31, wherein the connection between the integrated access device and the remote cross connect switch is capable of carrying digital subscriber line signals and analog telephone signals.

33. The system of claim 32, wherein the digital access multiplexer is a digital subscriber line access multiplexer.

34. The system of claim 33, wherein the digital access multiplexer is connected to a digital telecommunications network.

35. The system of claim 34, wherein, when the integrated access device is connected to the digital access multiplexer, the connection between the integrated access device and the digital access multiplexer carries a digital subscriber line signal.

36. The system of claim 35, wherein, when the integrated access device is connected to the voice service gateway, the connection between the integrated access device and the voice service gateway carries an analog telephone signal.

37. A system for providing telephone service in the event of a power failure comprising:
a remote cross connect switch connected to an integrated access device, to a digital access multiplexer connected to a digital telecommunications network, and to a voice service gateway, the remote cross connect switch operable to supply a first connection between the integrated access device and the digital access multiplexer, a second connection between the integrated access device and the voice service gateway, and to switch between the first and second connections; and
a network management system connected to the digital telecommunications network and to the remote cross connect switch, the network management system operable to receive a message from the integrated access device indicating that power supplied to the integrated access device has failed and to, in response, transmit a command to the remote cross connect switch to switch from the first connection to the second connection.

38. The system of claim 37, wherein the connection between the integrated access device and the remote cross connect switch is capable of carrying digital subscriber line signals and analog telephone signals.

39. The system of claim 38, wherein the digital access multiplexer is a digital subscriber line access multiplexer.

40. The system of claim 39, wherein, when the integrated access device is connected to the digital access multiplexer, the connection between the integrated access device and the digital access multiplexer carries a digital subscriber line signal.

41. The system of claim 40, wherein the voice service gateway is connected to a public switched telephone network.

42. The system of claim 41, wherein, when the integrated access device is connected to the voice service gateway, the connection between the integrated access device and the voice service gateway carries an analog telephone signal.

43. The system of claim 37, wherein the network management system is further operable to receive a message from the integrated access device indicating that power supplied to the integrated access device has resumed and to, in response, transmit a command to the remote cross connect switch to switch from the second connection to the first connection.

44. The system of claim 43, wherein the connection between the integrated access device and the remote cross connect switch is capable of carrying digital subscriber line signals and analog telephone signals.

45. The system of claim 44, wherein the digital access multiplexer is a digital subscriber line access multiplexer.

46. The system of claim 45, wherein, when the integrated access device is connected to the digital access multiplexer, the connection between the integrated access device and the digital access multiplexer carries a digital subscriber line signal.

47. The system of claim 46, wherein the voice service gateway is connected to a public switched telephone network.

48. The system of claim 47, wherein, when the integrated access device is connected to the voice service gateway, the connection between the integrated access device and the voice service gateway carries an analog telephone signal.
